# FASCICULE DE BREVET EUROPEEN

(11) **EP 3 499 319 B1**
(45) Date de publication et mention de la délivrance du brevet: **15.01.2025**
(21) Numéro de dépôt: 19153581.4
(22) Date de dépôt: 20.08.2013
(51) Int. Cl.: G04B 19/25, G04B 27/06, G04B 11/00, G04B 13/02

(54) **BASCULE D'EMBRAYAGE ET DISPOSITIF D'EMBRAYAGE POUR MECANISME HORLOGER**
KUPPLUNGSWIPPE UND KUPPLUNGSVORRICHTUNG FÜR UHRMECHANISMUS
CLUTCH LEVER AND CLUTCH DEVICE FOR A CLOCKWORK MECHANISM

(30) Priorité: 21.08.2012 EP 12181256
(43) Date de publication de la demande: 19.06.2019
(62) Demande divisionnaire de: 13181020.2
(73) Titulaire: ROLEX SA, 1211 Genève 26 (CH)
(72) Inventeur: VILLARET, Pierre, 74350 VILLY LE PELLOUX (FR)
(74) Mandataire: Moinas & Savoye SARL

(56) Documents cités:
- EP-A2- 0 069 814
- CH-A- 302 210
- CH-A2- 703 697
- CH-B5- 572 235
- CH-B5- 589 880
- DE-A1- 2 853 888
- GB-A- 870 989
- JP-A- S4 945 973
- JP-A- S5 263 067
- JP-A- S5 658 475
- JP-A- S52 156 664
- JP-U- S54 118 860
- US-A- 1 054 447
- US-A- 325 536

## Description

L'invention concerne un dispositif d'embrayage, en particulier un dispositif d'accouplement unidirectionnel prévu pour embrayer un premier rouage à au moins un deuxième rouage, le dispositif comprenant une bascule. Elle concerne enfin un mouvement horloger ou une pièce d'horlogerie, notamment une montre, comprenant une telle bascule ou un tel dispositif d'embrayage.

Des dispositifs d'accouplement unidirectionnels prévus pour embrayer un premier rouage à au moins un deuxième rouage d'un mouvement horloger sont connus. De tels dispositifs sont particulièrement connus au sein de mécanismes de correction ou de remontage d'un mouvement d'horlogerie.

Par dispositif d'accouplement unidirectionnel, nous entendons un dispositif qui comprend généralement deux roues de transmission, l'une menante, l'autre menée, qui se solidarisent dans un sens de rotation et se désolidarisent dans l'autre. Pour ce faire, un degré de liberté conféré à la roue menante permet de faire varier l'entre-axe des deux roues et ainsi de réaliser l'engrènement de la roue menée en fonction du sens de rotation de la roue menante. On connaît des solutions au sein desquelles la roue menante, éventuellement accouplée à un ressort d'embrayage, est pivotée au sein d'une découpe ou sur une bascule de façon à faire déplacer son axe de pivotement relativement à celui de la roue menée. Ces conceptions ne sont pourtant pas optimales en regard de leur fiabilité, de leur robustesse, de leur encombrement, ou encore de leur mode d'assemblage.

La demande de brevet EP1925996A1 divulgue un dispositif d'accouplement unidirectionnel employé au sein d'un mécanisme de correction rapide de deux indications calendaires. Celui-ci est formé d'une roue intermédiaire de correction entraînée par une tige de remontoir qui est en prise avec un pignon baladeur de correction disposé au sein d'une découpe oblongue incurvée. Ainsi, le pignon baladeur est susceptible de passer d'une première position stable de correction d'un premier organe d'affichage à une deuxième position stable de correction d'un deuxième organe d'affichage selon le sens de rotation de la tige de remontoir. Une telle solution présente l'avantage de requérir peu de composants. Toutefois, celle-ci est dépendante d'un nombre conséquent de jeux d'assemblage. Ainsi, l'ébat axial et radial du pignon correcteur est particulièrement délicat à maîtriser. En conséquence, le couple de pivotement du pignon baladeur est variable, à tel point que son pivot risque de ne pas être déplacé sous l'effet de l'inversion du sens de rotation de la tige de remontoir, et ne pas permettre l'une ou l'autre des deux fonctions de correction.

Une solution consiste à adjoindre un ressort d'embrayage, ou ressort de friction, au pignon baladeur afin de garantir un couple suffisant pour permettre le déplacement du pignon baladeur par effet de couple en raison de son sens de rotation. Cette solution présente l'avantage de générer un couple au correcteur indépendamment de la façon dont celui-ci est pivoté. Toutefois, celle-ci ne permet pas de garantir le positionnement axial et radial du correcteur relativement à son environnement. Par ailleurs, ce dispositif d'accouplement a pour désavantage d'être encombrant et de ne pouvoir être assemblé indépendamment d'un nombre important de composants du mouvement de la pièce d'horlogerie. Ainsi, ce dispositif d'accouplement ne peut être testé et validé qu'une fois la procédure de montage du mouvement bien entamée.

Une solution consiste à faire pivoter un pignon correcteur sur une bascule d'embrayage dont l'axe de rotation coïncide avec celui de la roue qui est en prise avec ce pignon correcteur. Ainsi, l'ébat radial et axial de ce pignon est maîtrisé par des moyens d'assemblage constitutifs de la bascule d'embrayage. La demande CH703697A2 divulgue un dispositif de correction au sein duquel les correcteurs sont pivotés sur une bascule de ce type. Le document précise que ce sont les frottements intervenant entre cette bascule et l'une des roues de correction qui permettent d'emmener la bascule dans l'une ou l'autre de ces positions extrêmes de correction en fonction du sens de rotation du correcteur. Toutefois, il semble que les moyens d'assemblage conventionnels ne permettent pas de maîtriser convenablement les frottements au point de fiabiliser un tel dispositif d'accouplement. En conséquence, les couples de pivotement des correcteurs sont variables, à tel point que les pivots risquent de ne pas être déplacés sous l'effet de l'inversion du sens de rotation de la tige de remontoir, et ne pas permettre l'une ou l'autre des deux fonctions de correction.

Une solution consiste donc à disposer un clinquant de friction au niveau de l'axe de pivotement du correcteur de façon à maintenir ce dernier à l'encontre de la bascule en lui imprimant une force d'appui axiale, et ainsi garantir un frottement adéquat entre la bascule et le correcteur. Bien que cette solution permette d'obvier aux inconvénients précités, celle-ci semble toutefois peu robuste en regard des tolérances de fabrication inhérentes à ce type de ressort, du nombre de pièces intervenant au sein de cet assemblage, et des tolérances d'assemblage qui se doivent d'être particulièrement serrées du fait du mode de montage de ce ressort.

Le document US325536 divulgue un dispositif pour la mise en oeuvre d'un mécanisme de remontage au sein duquel l'axe de pivotement d'une roue entraîneuse de rochet est guidé sur une bascule d'embrayage, et freiné par un ressort de friction lui appliquant une force radiale. Plus particulièrement, une surface de réception annulaire formée sur la bascule est prévue pour guider en rotation une portion cylindrique de pivotement de la roue entraîneuse de rochet, tandis qu'un ressort lame, fabriqué d'un seul tenant avec la bascule, est prévu pour plaquer cette portion cylindrique de la roue entraîneuse de rochet à l'encontre de ladite surface de réception. Une rotation de la tige de remontoir dans un premier sens de rotation induit la rotation du rochet par l'entraînement de la roue entraîneuse de rochet, et donc l'armage du ressort de barillet. Dans cette configuration, la roue entraîneuse de rochet est guidée par la surface de réception de la bascule sous l'effet du ressort-lame. Dans un deuxième sens de rotation de la tige de remontoir, le ressort-lame fléchit sous l'effet de l'inversion du sens de rotation de la roue entraîneuse de rochet, si bien que cette dernière est débrayée du rochet. Dans cette configuration, la roue entraîneuse de rochet n'est plus en contact avec la surface de réception de la bascule, et son guidage en rotation est ainsi dégradé. Par ailleurs, le débrayage du mécanisme de remontage n'est non pas généré par la rotation de la bascule d'embrayage, mais bien par le fléchissement du ressort lame qui confère un degré de liberté à la roue entraîneuse de rochet. Au vu de l'état de l'art, il n'existe pas de solution simple permettant de proposer un dispositif d'accouplement unidirectionnel dont la roue menante, par exemple un pignon correcteur, est pivotée de telle sorte que son guidage, ainsi que son couple de pivotement soient parfaitement maîtrisés. Par ailleurs, il n'existe pas de solution simple permettant d'optimiser, notamment d'augmenter, le couple résistant ou résistif s'opposant au pivotement de la roue menante en vue de garantir le bon fonctionnement du dispositif d'accouplement unidirectionnel.

On connaît aussi du document CH572235B5 un dispositif particulier de mise à l'heure et de correction.

Le but de l'invention est de fournir un dispositif d'embrayage comprenant une bascule permettant de remédier aux inconvénients mentionnés précédemment et d'améliorer les bascules connues de l'art antérieur. En particulier, l'invention propose une bascule permettant de réaliser de manière simple, fiable et robuste un dispositif d'accouplement unidirectionnel, notamment pour mécanisme de correction ou de remontage.

Selon un premier aspect, un dispositif d'embrayage comprenant une bascule selon l'invention est définie par la revendication 1.

Selon le premier aspect, différents modes de réalisation de dispositif d'embrayage comprenant une bascule sont définis par les revendications 2 à 11.

Dans les différents modes de réalisation et/ou variantes selon le premier aspect, au moins une surface d'appui de l'au moins un élément de friction peut être réalisée par une portion de flanc de la fente.

Dans les différents modes de réalisation et/ou variantes selon le premier aspect, au moins un élément de friction peut comprendre au moins une surface d'appui, notamment deux ou trois ou quatre surfaces d'appui, notamment au moins une surface d'appui ponctuel, notamment deux ou trois ou quatre surfaces d'appui ponctuel.

Dans les différents modes de réalisation et/ou variantes selon le premier aspect, la bascule peut comprendre deux surfaces d'appui, au moins l'une des surfaces d'appui étant au moins globalement concave pour épouser la forme du premier mobile, notamment la forme de la portion au moins sensiblement cylindrique du premier mobile.

Dans les différents modes de réalisation et/ou variantes selon le premier aspect, l'au moins un élément élastique est préférablement réalisé :
- en acier, notamment en acier Durnico, ou
- en alliage CuBe2, ou
- en nickel ou en nickel-phosphore, ou
- en silicium.

Selon le premier aspect, un mouvement est défini par la revendication 12.

Selon le premier aspect, une pièce d'horlogerie est définie par la revendication 13.

Selon le premier aspect, une utilisation est définie par la revendication 14.

Dans les différents modes de réalisation et/ou variantes selon le deuxième aspect, au moins une surface d'appui de l'au moins un élément de friction peut être réalisée par une portion de flanc de la fente.

Dans les différents modes de réalisation et/ou variantes selon le deuxième aspect, au moins un élément de friction peut comprendre au moins une surface d'appui, notamment deux ou trois ou quatre surfaces d'appui, notamment au moins une surface d'appui ponctuel, notamment deux ou trois ou quatre surfaces d'appui ponctuel.

Dans les différents modes de réalisation et/ou variantes selon le deuxième aspect, la bascule peut comprendre deux surfaces d'appui, au moins l'une des surfaces d'appui étant au moins globalement concave pour épouser la forme du premier mobile, notamment la forme de la portion au moins sensiblement cylindrique du premier mobile.

Dans les différents modes de réalisation et/ou variantes selon le deuxième aspect, l'au moins un élément élastique est préférablement réalisé :
- en acier, notamment en acier Durnico, ou
- en alliage CuBe2, ou
- en nickel ou en nickel-phosphore, ou
- en silicium.

Les dessins annexés représentent, à titre d'exemple, trois modes de réalisation d'une bascule selon l'invention.
Les figures 1 et 2 sont des vues de dessus d'un premier mode de réalisation non revendiqué, d'un mouvement d'horlogerie comprenant un premier mode de réalisation d'un dispositif d'embrayage muni d'un premier mode de réalisation d'une bascule selon l'invention.
La figure 3 est une vue de coupe du premier mode de réalisation de bascule selon un plan III-III de la figure 4.
La figure 4 est une vue en coupe du premier mode de réalisation de bascule selon un plan IV-IV de la figure 3.
La figure 5 est une vue en coupe du premier mode de réalisation du dispositif d'embrayage selon un plan V-V de la figure 2.
La figure 6 est une vue de dessous du premier mode de réalisation de mouvement d'horlogerie.
La figure 7 est une vue de dessus du premier mode de réalisation du mouvement d'horlogerie comprenant le premier mode de réalisation du dispositif d'embrayage muni d'une variante revendiquée du premier mode de réalisation de bascule selon l'invention.
La figure 8 est une vue de dessus du premier mode de réalisation du mouvement d'horlogerie comprenant le premier mode de réalisation du dispositif d'embrayage muni de la variante du premier mode de réalisation de bascule selon l'invention, la bascule d'embrayage étant bloquée dans une position angulaire neutre.
La figure 9 est une vue de détail du premier mode de réalisation du mouvement d'horlogerie comprenant le premier mode de réalisation du dispositif d'embrayage muni de la variante du premier mode de réalisation de bascule selon l'invention, la bascule d'embrayage étant positionnée dans une position de réglage du mouvement d'horlogerie.
La figure 10 est une vue de la variante du premier mode de réalisation de la bascule selon l'invention.
La figure 11 est une vue d'un deuxième mode de réalisation non revendiqué de bascule selon l'invention.
La figure 12 est une vue en coupe du deuxième mode de réalisation de bascule selon l'invention selon un plan XII-XII de la figure 11.
La figure 13 est une vue d'un troisième mode de réalisation non revendiqué de bascule selon l'invention.
La figure 14 est une vue en coupe du troisième mode de réalisation de bascule selon l'invention selon un plan XIV-XIV de la figure 13.

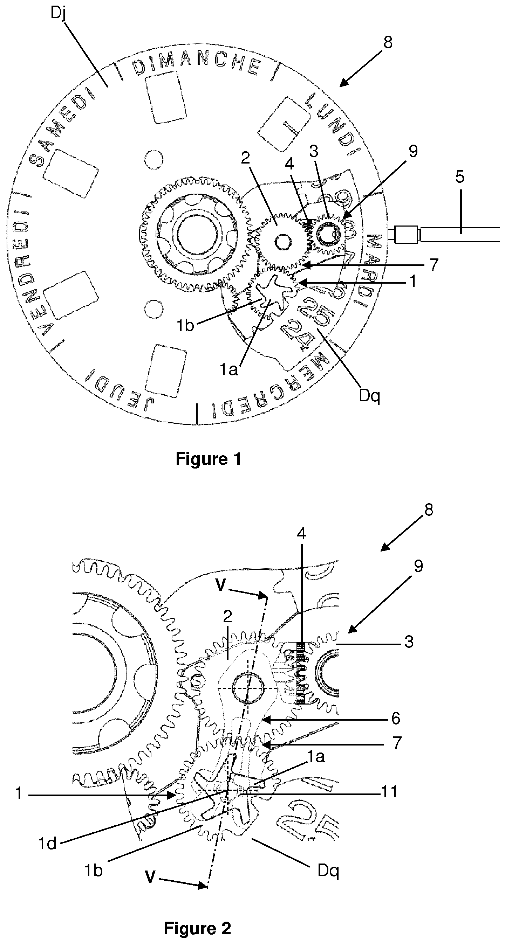

Un premier mode de réalisation d'un mouvement d'horlogerie 8 selon l'invention est décrit ci-après en référence aux figures 1 et 2. Le mouvement comprend de préférence un mécanisme 9 correcteur de calendrier prévu pour corriger, par exemple, les indications de la date et du jour de la semaine.

Le mécanisme correcteur peut comprendre un mobile de correction 1 faisant office de mobile menant capable d'engrener sélectivement avec deux mobiles menés pour réaliser deux dispositifs d'accouplement unidirectionnels distincts. Ce mobile de correction fait partie intégrante d'une chaîne cinématique de correction qui est entraînée par la rotation d'une tige de commande 5 d'un mouvement à calendrier classique lorsque celle-ci est positionnée dans une position axiale prédéfinie, via un dispositif d'embrayage 7.

La chaîne cinématique de correction est constituée d'un pignon de commande 4 qui est solidaire en rotation de la tige de commande 5, d'un renvoi intermédiaire 3, et d'un renvoi intermédiaire de correction 2 qui est en prise avec le mobile de correction 1. Le mobile 1 comprend un premier arbre 11. Le mobile 2 tourne autour d'un deuxième arbre 21.

Ce mobile de correction 1 est susceptible de passer d'une première position stable de correction des quantièmes 10 à une deuxième position stable de correction de l'indication des jours 100 selon le sens de rotation de la tige 5. Plus particulièrement, lorsque la tige est entraînée dans le sens des aiguilles d'une montre, un correcteur des quantièmes 1a du mobile de correction 1 est positionné de sorte à ce que sa denture puisse entraîner une denture d'un disque des quantièmes Dq. Lorsque la tige est entraînée en sens contraire à celui des aiguilles d'une montre, une roue de correction 1b du mobile 1 est positionnée de sorte à ce que sa denture puisse entraîner la chaîne cinématique de correction de l'indication des jours afin d'entraîner en rotation le disque des jours Dj.

Dans un mode de réalisation préféré représenté aux figures 1 et 2, le mobile de correction 1 est pivoté sur une bascule d'embrayage 6 qui est prévue pour combiner les fonctions de bascule d'accouplement, ou bascule d'embrayage horizontal, et également celle de ressort de friction. Plus particulièrement, cette bascule est conformée de façon à faire pivoter le mobile 1 tout en lui imprimant une force de serrage radiale ou sensiblement radiale, ce qui, du fait d'un phénomène de frottement, crée un couple de freinage ou de friction s'opposant à la rotation du mobile 1 de correction par rapport à la bascule et entraîne ainsi cette bascule en rotation.

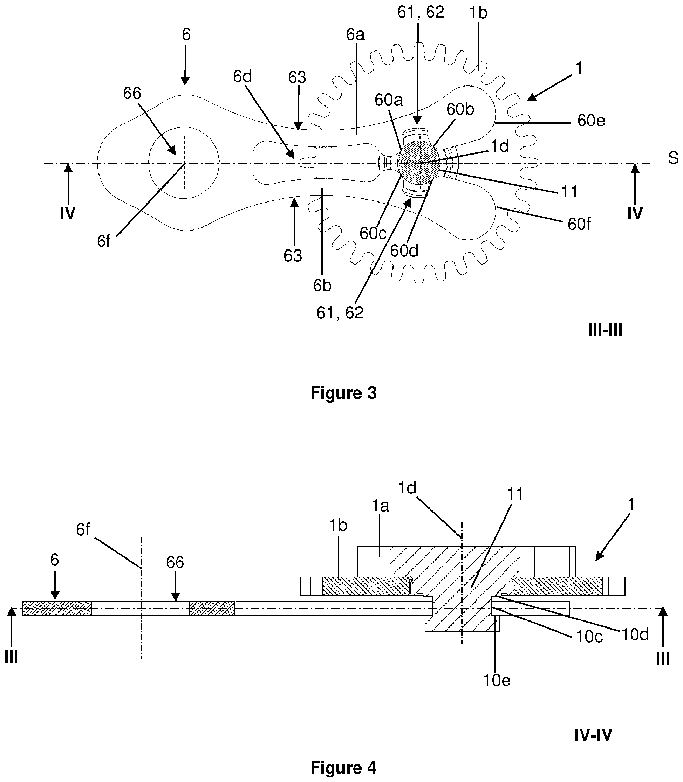

Comme représenté aux figures 3 à 6, la bascule 6 comprend au moins un premier élément 61 de guidage en rotation du premier mobile 1, notamment du mobile de correction 1, en particulier du premier arbre 11 du premier mobile 1, au moins un élément de friction 62 destiné à venir coopérer avec une portion 10c au moins sensiblement cylindrique du premier mobile, en particulier du premier arbre 11 du premier mobile, et au moins un élément élastique 63 destiné à rappeler élastiquement l'au moins un élément de friction en état de coopération avec la portion du premier mobile, notamment en contact avec la portion du premier mobile.

L'au moins un élément de friction applique au moins une force radiale ou sensiblement radiale sur la portion de premier arbre du premier mobile, afin de produire le couple de freinage ou de friction s'opposant à la rotation du mobile de correction 1 par rapport à la bascule.

Dans le premier mode de réalisation, l'élément de guidage en rotation et l'au moins un élément de friction sont confondus.

La bascule 6 est dotée de deux bras élastiques 6a, 6b qui, une fois déformés élastiquement, sont prévus pour recevoir le premier arbre 11 du mobile de correction 1 et définir son axe de pivotement 1d. Les bras s'étendent de préférence longitudinalement jusqu'à une extrémité de la bascule. Les bras sont séparés l'un de l'autre par une ouverture 6d, en particulier une ouverture en forme de fente, notamment une ouverture débouchante en forme de fente. Cette ouverture 6d permet de recevoir le premier arbre 11. Cette ouverture s'étend préférentiellement depuis l'extrémité précédemment mentionnée. Chacun des deux bras élastiques comporte au moins une surface d'appui60a, 60b, 60c, 60d destinée à coopérer avec la portion cylindrique 10c de l'arbre 11. Préférentiellement, chacun des deux bras élastiques comporte au moins une surface d'appui 60a, 60b, 60c, 60d destinée à coopérer ponctuellement avec la portion cylindrique 10c de l'arbre 11 (c'est-à-dire selon un point de contact ou selon une surface d'aire limitée). Ainsi, l'axe de rotation 1d du mobile 1 est avantageusement défini de manière univoque par au moins deux surfaces d'appui destinées à coopérer ponctuellement (c'est-à-dire selon un point de contact) avec la portion cylindrique 10c de l'arbre 11. Préférentiellement, on dénombre deux surfaces d'appui 60a, 60b et 60c, 60d sur chacun des bras élastiques 6a, 6b. Les surfaces d'appui sont, par exemple, des bossages réalisés sur les bras, mais peuvent aussi être confondues avec les bras. Autrement dit, les surfaces d'appui ont, par exemple, un rayon de courbure négatif du côté de l'ouverture 6d qui est sensiblement distinct du rayon de courbure des bras. Les rayons de courbure des surfaces d'appui peuvent être aussi confondus avec les rayons de courbure des bras. Alternativement, les surfaces d'appui peuvent être rectilignes, à savoir qu'elles peuvent avoir un rayon de courbure infini. Alternativement encore, les surfaces d'appui peuvent avoir un rayon de courbure positif. Les surfaces d'appui de chacun des bras sont, par exemple, symétriques l'un de l'autre par rapport à un axe de symétrie S de l'ouverture 6d de la bascule 6. Les bras élastiques 6a, 6b sont, par exemple, symétriques l'un de l'autre par rapport à l'axe de symétrie S de l'ouverture 6d de la bascule 6. De préférence, cette symétrie est conservée quel que soit le degré d'ouverture des bras 6a, 6b. Ainsi, l'axe de rotation 1d du mobile 1 est défini de manière univoque, et ce quelles que soient les variations de diamètre de la portion cylindrique 10c de l'arbre 11, et donc de la déformation élastique des bras 6a, 6b. Cette définition est obtenue par la géométrie des bras et des surfaces d'appui venant coopérer par contact sur la portion cylindrique 10c. Cette définition est telle que l'axe 1d est positionné au lieu adéquat permettant le bon fonctionnement de l'engrenage du mobile de correction 1 avec le mobile de renvoi intermédiaire de correction 2. Ainsi, l'entre-axe entre les mobiles 1 et 2 est déterminé indépendamment des variations de diamètre de la portion cylindrique 10c de l'arbre 11. Le couple de serrage de la portion cylindrique 10c est, quant-à-lui, maîtrisé par les propriétés élastiques et le pré-armage des bras 6a et 6b.

Avantageusement, chacune des extrémités 60e, 60f des bras élastiques respectifs 6a, 6b est conformée pour permettre l'engagement de l'arbre 11 du mobile 1 au sein de l'ouverture 6d de la bascule 6, en particulier l'engagement de la portion 10c d'arbre au sein de l'ouverture 6d de la bascule 6, et ainsi permettre la coopération des surfaces d'appui 60a, 60b, 60c, 60d avec l'arbre 11, tout en pré-armant de manière adéquate les bras 6a et 6b du ressort 6. Notamment, les deux extrémités forment un V permettant l'engagement du premier mobile en déformant élastiquement les bras. Les extrémités des bras peuvent être arrondies à cet effet.

Préférentiellement, la portion 10c de l'arbre 11 qui est en contact avec les surfaces d'appui 60a, 60b, 60c, 60d est délimitée par des portées 10d, 10e qui maintiennent axialement le mobile de correction 1. Ainsi, ce mobile de correction 1 peut être préassemblé sur la bascule 6 avant montage du mouvement, et être guidé par un bâti 7a, 7b du mouvement d'horlogerie après montage au sein du mouvement. Dans une variante de réalisation, les portées 10d, 10e peuvent également définir un ébat axial du mobile de correction 1 en fonctionnement.

Dans ce premier mode de réalisation, une ouverture 66, notamment un alésage, formée sur la bascule 6 est également prévue de façon à guider radialement la bascule et la pivoter autour d'un axe de rotation 6f qui coïncide avec celui du renvoi intermédiaire de correction 2. Ainsi, la bascule comprend un deuxième élément 66 de guidage en rotation de la bascule autour du deuxième arbre 21.

Dans ce premier mode de réalisation, la bascule comprend deux éléments de guidage 61, c'est-à-dire un élément de guidage sur chacun des bras. Chaque élément de guidage comprend, par exemple, deux bossages dont les surfaces d'appui 60a, 60b, 60c et 60d sont destinées à venir coopérer par contact avec la portion cylindrique 10c. Préférentiellement, les surfaces d'appui 60a, 60b, 60c et 60d sont destinées à venir coopérer par contact ponctuel avec la portion cylindrique 10c. Ainsi, grâce à ces contacts, l'arbre 11 du premier mobile 1 peut être guidé en rotation autour de l'axe 1d.

Dans ce premier mode de réalisation, la bascule comprend deux éléments de friction 62, c'est-à-dire un élément de friction 62 sur chacun des bras. Préférentiellement, chaque élément de friction comprend deux bossages dont les surfaces d'appui 60a, 60b, 60c et 60d sont destinées à venir coopérer par contact avec la portion cylindrique 10c. Les éléments de friction sont réalisés sur les flancs de la fente, en particulier, les surfaces d'appui des éléments de friction sont réalisées par des portions de flanc de la fente. Chaque élément de friction comprend deux surfaces d'appui 60a, 60b et 60c, 60d. Au niveau des contacts, des forces radiales ou sensiblement radiales sont appliquées sur la portion cylindrique 10c. Lorsque le mobile 1 est mis en rotation, ces dernières créent un couple mécanique de friction s'opposant à la rotation du mobile 1. L'intensité de ce couple est déterminée par le coefficient de frottement des surfaces d'appui sur la portion 10c et par l'intensité des forces exercées. Cette intensité des forces est elle-même déterminée par l'au moins un élément élastique 63 destiné à rappeler élastiquement l'au moins un élément de friction en contact avec la portion 10c du premier arbre 11.

Dans ce premier mode de réalisation, la bascule comprend deux éléments élastiques 63 destinés à rappeler élastiquement l'au moins un élément de friction en contact avec la portion 10c du premier arbre. Ainsi, chaque élément élastique comprend un bras 6a, 6b. Comme vu précédemment, les bras sont délimités par des flancs de la fente. Les géométries des bras 6a, 6b sont bien sûr définies de façon à générer des contraintes admissibles et minimisées pour le matériau les constituant. L'épaisseur et la forme de ces bras 6a, 6b sont définies, par exemple, suite à une optimisation réalisée à l'aide d'un programme de simulation numérique tel qu'ANSYS.

Les bras sont constitués de tout matériau approprié, comme l'acier, par exemple l'acier Durnico c'est-à-dire un acier au nickel, au cobalt et au molybdène, ou encore le CuBe2. Ils peuvent également être constitués par exemple de nickel, de nickel-phosphore, ou encore de silicium. Ces bras peuvent être fabriqués, par exemple, au moyen de techniques d'usinage conventionnelles telles que l'étampage, ou encore la découpe au fil ou laser. Ils peuvent également être fabriqués au moyen de techniques bien connues de micro-fabrication, comme les procédés UV-LIGA ou DRIE par exemple.

Dans le premier mode de réalisation, la bascule 6 est de préférence monobloc. Par « monobloc », on entend que la bascule 6 est fabriquée d'un seul tenant. Toute la bascule est donc réalisée avec le matériau constituant les bras. La bascule peut ainsi être réalisée comme décrit au paragraphe précédent. La bascule est dans ce cas de préférence réalisée en matériau élastique et peut être aussi désignée comme ressort.

De préférence, la bascule 6 est plane. Toutefois, il est imaginable de mettre en oeuvre une bascule étagée de façon à optimiser l'élasticité des bras 6a, 6b dans un contexte constructif donné.

Dans le premier mode de réalisation décrit, la bascule comprend donc deux éléments de friction comprenant chacun deux surfaces d'appui 60a, 60b, 60c, 60d. La bascule comprend ainsi quatre surfaces d'appui. Dans des variantes de réalisation, le nombre de ces surfaces d'appui peut bien sûr être différent. La bascule peut notamment présenter trois surfaces d'appui, voire deux surfaces d'appui, voire une seule surface d'appui. Dans ce dernier cas, un autre moyen est prévu pour assurer le guidage en rotation du premier arbre.

Dans le premier mode de réalisation décrit, la bascule comprend deux éléments de guidage comprenant chacun deux surfaces d'appui 60a, 60b, 60c, 60d. La bascule comprend donc quatre surfaces d'appui réalisant le guidage. Dans des variantes de réalisation, le nombre de ces surfaces d'appui peut bien sûr être différent. La bascule peut notamment présenter trois surfaces d'appui, voire deux surfaces d'appui. Dans ce dernier cas, au moins l'une des deux surfaces d'appui présente une forme au moins globalement concave pour épouser la forme du premier arbre. Dans ce cas également, les deux surfaces d'appui sont diamétralement opposées ou sensiblement diamétralement opposées, au moins un premier point d'une première surface d'appui étant diamétralement opposé à un deuxième point de la deuxième surface d'appui.

Bien entendu, les réalisations de la bascule décrites plus haut ne sont pas limitatives. Outre, le nombre de surfaces d'appui des bras qui sont en contact avec l'arbre 11 du mobile de correction 1, la géométrie de la bascule et des bras peut bien sûr être modifiée. Notamment, les bras peuvent ne pas être symétriques. En particulier, les nombres de surfaces d'appui sur chacun des bras peuvent être différents.

La bascule ne comprend de préférence ni le premier mobile et le deuxième, ni le premier axe du premier mobile et le deuxième axe du deuxième mobile.

Comme représenté aux figures 1, 2, 5 et 6, un mode de réalisation d'un dispositif 7 d'embrayage comprend la bascule 6 telle que décrite précédemment, le premier mobile 1 et le deuxième mobile 2. Le premier arbre est solidaire du reste du premier mobile 1 et le deuxième mobile ainsi que la bascule tournent autour du deuxième arbre. Par « solidaire de », on entend notamment « lié en rotation à », voire « fixé sur » ou « en liaison encastrement avec ». Le premier mobile est susceptible de venir directement en prise avec un troisième mobile d'une première chaîne cinématique, notamment avec une chaîne cinématique de correction du disque Dq des quantièmes, ou avec un quatrième mobile d'une deuxième chaîne cinématique, notamment avec une chaîne cinématique de correction du disque Dj des jours, selon l'état de l'embrayage, en particulier selon la position de la bascule. En effet, dans une première position de la bascule, le premier mobile est un mobile menant entraînant une première chaîne cinématique et, dans une deuxième position de la bascule, le deuxième mobile est un mobile menant entraînant une deuxième chaîne cinématique.

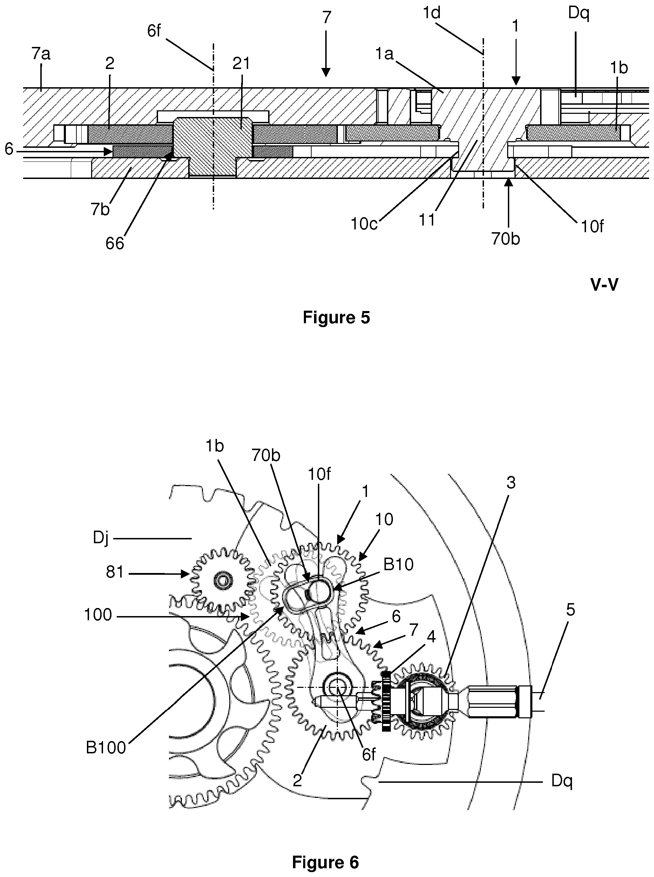

Ainsi, la bascule 6 fait office de bascule d'embrayage horizontal de chacun des dispositifs de correction du mouvement d'horlogerie 8. Lorsque la tige 5 est tournée dans le sens des aiguilles d'une montre, vu depuis l'arrière du cadran de la montre, le mobile de correction 1 tourne dans le sens contraire à celui des aiguilles d'une montre en sorte qu'un couple est transmis à la bascule pour la faire tourner dans le sens des aiguilles d'une montre autour de son axe 6f, mettant ainsi le correcteur 1a en prise avec la denture du disque des quantièmes Dq comme représenté à la figure 6. Cette position stable 10 de correction des quantièmes peut être définie par une portion 10f de l'axe 11 du mobile 1 qui vient en contact à l'encontre d'une butée B10 du bâti 7b du mouvement d'horlogerie.

Lorsque la tige est tournée en sens contraire, vu depuis l'arrière du cadran de la montre, un couple est transmis à la bascule pour la faire tourner dans le sens contraire à celui des aiguilles d'une montre autour de son axe 6f, mettant ainsi la roue de correction 1b du mobile 1 en prise avec un mobile correcteur des jours 81 qui entraîne le disque des jours Dj dans le sens des aiguilles d'une montre. Cette position stable 100 de correction de l'indication des jours est définie par la portion 10f de l'axe 11 qui vient en contact à l'encontre d'une butée B100 du bâti 7b du mouvement d'horlogerie.

Avantageusement, une ouverture oblongue 70b, prévue pour coopérer avec la portion 10f de l'arbre 11 du mobile 1, peut être conformée au sein du bâti 7b du mouvement d'horlogerie de façon à optimiser le guidage radial du mobile de correction 1.

En variante, la bascule 6 peut être dotée d'un bras 600 dont un flanc 600a, notamment une extrémité 600a, est prévue pour être actionnée par un mécanisme de commande additionnel en vue de dégager le mobile de correction 1 du disque des quantièmes Dq ou du mobile correcteur des jours 81 lorsque ces derniers sont susceptibles d'être actionnés par un dispositif de réglage connexe, notamment un mécanisme de mise à l'heure. Ainsi, une telle conformation permet d'augmenter sensiblement le couple résistif s'opposant au pivotement du mobile de correction en vue de garantir le bon fonctionnement du dispositif d'accouplement unidirectionnel, sans pour autant dégrader un dispositif de réglage connexe d'une information horaire, notamment un mécanisme de mise à l'heure susceptible d'entraîner le correcteur des jours et/ou le disque des quantièmes potentiellement en prises avec un mobile de correction 1 sur lequel agit le couple.

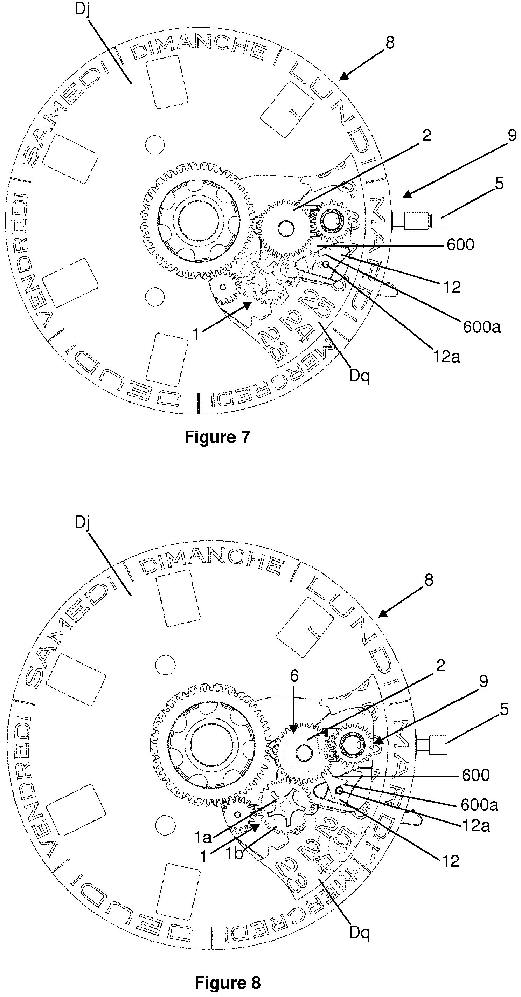

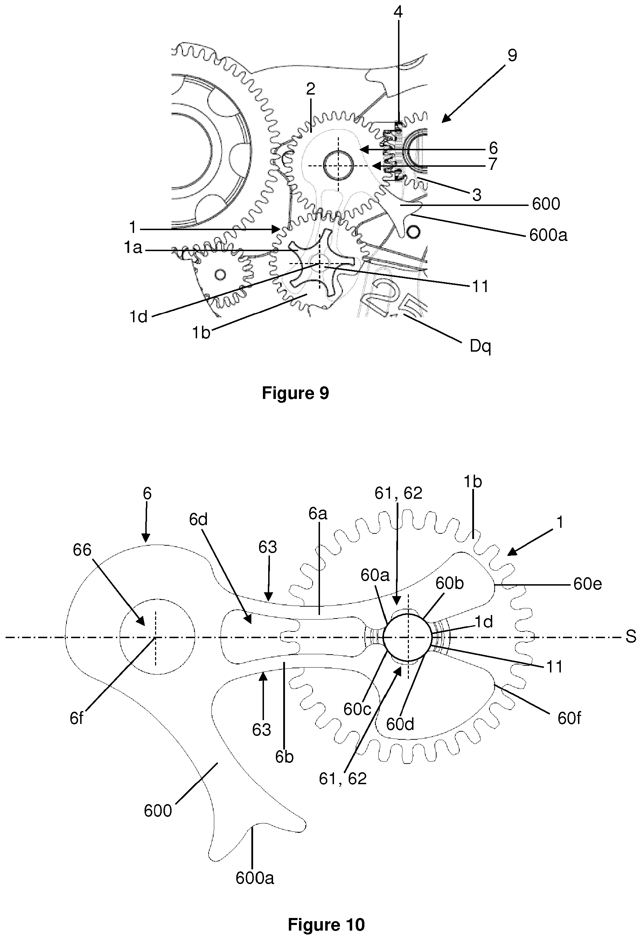

Les figures 7, 8, 9 et 10 illustrent une telle variante du premier mode de réalisation de bascule selon l'invention. Comme représenté à la figure 7, la bascule d'embrayage 6 est libre d'osciller entre les positions de correction 10 et 100. A cet effet, l'extrémité 600a du bras 600 est dégagée du contact de la goupille 12a portée par la bascule 12 du mécanisme de commande additionnel, qui est piloté notamment par la translation de la tige. La figure 8 illustre la bascule d'embrayage bloquée dans une position neutre par le mécanisme de commande additionnel. A cet effet, l'extrémité 600a de la bascule 6 est susceptible de venir en butée à l'encontre de la goupille 12a quel que soit le sens de rotation de la bascule 6. Ainsi, le mobile 1 est positionné de telle sorte que le correcteur 1a est hors de portée du disque des quantièmes Dq et que la roue 1b est hors de portée du mobile correcteur des jours. Le bras 600 peut aussi permettre d'immobiliser la bascule dans une autre position, notamment une position dans laquelle le ou les mobiles portés par la bascule engrènent avec d'autres éléments.

Dans ce premier mode de réalisation, notamment dans cette variante du premier mode de réalisation, le couple résistif au pivotement du mobile de correction 1 qui est produit par les éléments de friction 61, 62, est supérieur à 2, 3, voire 5, voire 6 fois le couple résistif au pivotement de la bascule de correction autour de l'axe de rotation 6f.

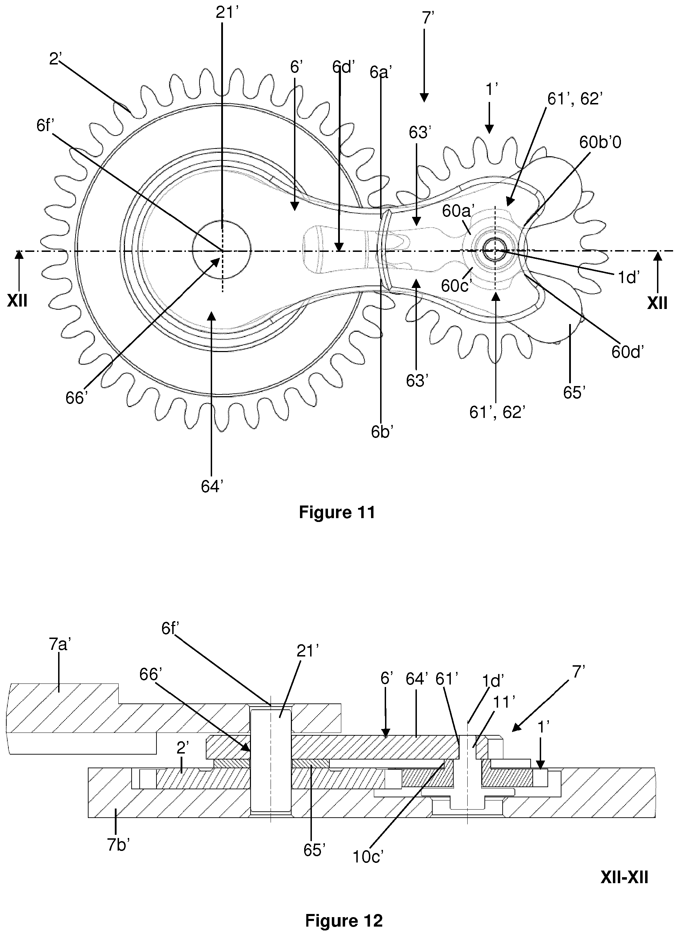

Un deuxième mode de réalisation de bascule 6' est décrit ci-après en référence aux figures 11 et 12. Ce deuxième mode de réalisation diffère du premier mode de réalisation en ce que la bascule comprend un corps 64' et un composant 65' rapporté sur le corps. Ce composant comprend au moins un élément de friction 62' et au moins un élément élastique 63'. De préférence, les éléments de friction et/ou les éléments élastiques sont uniquement présents sur le composant 65'. Sur les figures illustrant ce deuxième mode de réalisation, il a été ajouté un « ' » aux références numériques désignant les éléments se retrouvant à l'identique ou assurant les mêmes fonctions que dans le premier mode de réalisation. Ainsi, par exemple, le premier mobile référencé « 1 » dans le premier mode de réalisation est référencé « 1' » dans le deuxième mode de réalisation. Dans le deuxième mode de réalisation, le composant comprend encore au moins un élément de guidage en rotation 61' du premier arbre.

Ainsi, dans ce deuxième mode de réalisation, la bascule combine :
- un composant, notamment un composant de type ressort assurant un guidage en rotation du premier arbre et une friction en générant un serrage radial de l'arbre du mobile 1', et
- un corps de bascule d'embrayage horizontal conventionnel.

Ceci permet une répartition des fonctions de la bascule sur le corps de bascule et sur le composant et donc de s'adapter au mieux à un contexte constructif donné.

Par exemple, le composant 65' peut être encastré ou fixé ou monté solidaire du corps de bascule 64'. Comme dans le premier mode de réalisation, les géométries des bras 6a', 6b' sont conformés de façon à définir l'axe de rotation 1d' du premier mobile 1' tout en imprimant un couple de serrage adéquat de son arbre 11' pour obtenir un couple de friction désiré.

Cependant, le pivotement de la bascule 6' dans le plan s'effectue par l'entremise du corps de bascule 64' autour d'un axe de rotation 6f'. Ce pivotement et cet axe sont définis par une ouverture 66', notamment un alésage, pratiquée dans le corps de bascule 64'. L'axe ainsi défini coïncide avec celui du mobile de renvoi intermédiaire 2' qui est en prise avec le mobile menant 1'.

Comme représenté aux figures 11 et 12, un mode de réalisation d'un dispositif 7' d'embrayage comprend la bascule 6' telle que décrite précédemment, le premier mobile 1' et le deuxième mobile 2'. Le premier mobile est susceptible de venir directement en prise avec un troisième mobile d'une première chaîne cinématique ou éventuellement avec un quatrième mobile d'une deuxième chaîne cinématique selon l'état de l'embrayage, en particulier selon la position de la bascule. En effet, dans une première position de la bascule, le premier mobile est un mobile menant entraînant une première chaîne cinématique et, dans une deuxième position de la bascule, le premier mobile est un mobile menant pouvant entraîner une deuxième chaîne cinématique.

Comme pour le premier mode de réalisation, la bascule 6' peut être dotée d'un bras dont un flanc, notamment une extrémité, qui est prévue pour être actionnée par un mécanisme de commande additionnel en vue de dégager le mobile 1' du troisième mobile ou du quatrième mobile lorsque ces derniers sont susceptibles d'être actionnés par un dispositif de réglage connexe. Le bras peut aussi permettre d'immobiliser la bascule dans une autre position, notamment une position dans laquelle le ou les mobiles portés par la bascule engrènent avec d'autres éléments. Dans ce deuxième mode de réalisation, le couple résistif au pivotement du mobile de correction 1' qui est produit par les éléments de friction 61', 62', est supérieur à 2, 3, voire 5, voire 6 fois le couple résistif au pivotement de la bascule de correction autour de l'axe de rotation 6f'.

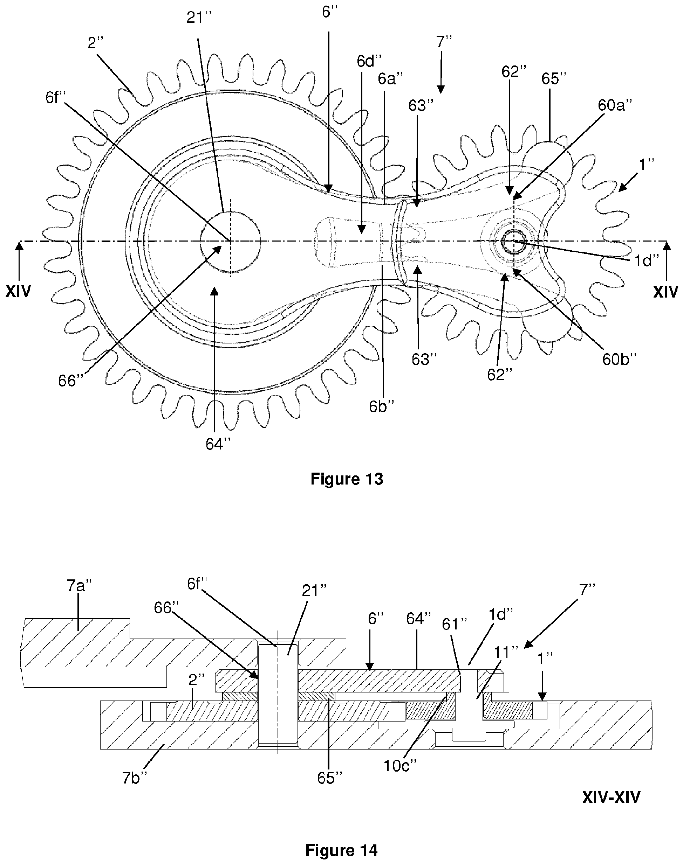

Un troisième mode de réalisation de bascule 6" est décrit ci-après en référence aux figures 13 et 14. Ce troisième mode de réalisation diffère du deuxième mode de réalisation en ce que l'élément de guidage en rotation du premier arbre 11" du premier mobile 1" est réalisé sur le corps de bascule 64" et non sur le composant 65". Le composant comprend au moins un élément de friction 62" et au moins un élément élastique 63". De préférence, les éléments de friction et/ou les éléments élastiques sont uniquement présents sur le composant. Sur les figures illustrant ce troisième mode de réalisation, il a été ajouté un « " » aux références numériques désignant les éléments se retrouvant à l'identique ou assurant les mêmes fonctions que dans le premier mode de réalisation. Ainsi, par exemple, le premier mobile référencé « 1 » dans le premier mode de réalisation est référencé « 1" » dans le troisième mode de réalisation.

Ainsi, l'axe de rotation 1d" du mobile menant 1" est défini par le corps de bascule 64". En effet, un alésage 61" permet de guider l'arbre en rotation autour de l'axe 1d". Par contre, le couple de fiction s'opposant à la libre rotation du premier mobile 1" est défini par le composant 65". En effet, comme illustré aux figures 13 et 14, des bras 6a", 6b" viennent se plaquer, au niveau de surfaces d'appui 60a" et 60b" qui sont confondues avec les bras 6a", 6b", sur la portion 1c" de l'arbre 11". Tout comme dans le mode de réalisation précédent, la rotation de la bascule 6" dans le plan s'effectue par l'entremise du corps de bascule 64" dont l'axe de rotation 6f" est défini par une ouverture 66", notamment un alésage, pratiqué sur le corps de bascule 64". Cet axe coïncide avec celui du mobile de renvoi 2" qui est en prise avec le mobile menant 1".

Comme représenté aux figures 13 et 14, un mode de réalisation d'un dispositif 7" d'embrayage comprend la bascule 6" telle que décrite précédemment, le premier mobile 1" et le deuxième mobile 2". Le premier mobile est susceptible de venir directement en prise avec un troisième mobile d'une première chaîne cinématique ou éventuellement avec un quatrième mobile d'une deuxième chaîne cinématique selon l'état de l'embrayage, en particulier selon la position de la bascule. En effet, dans une première position de la bascule, le premier mobile est un mobile menant entraînant une première chaîne cinématique et, dans une deuxième position de la bascule, le premier mobile est un mobile menant pouvant entraîner une deuxième chaîne cinématique.

Comme pour les premier et deuxième modes de réalisation, la bascule 6" peut être dotée d'un bras dont un flanc, notamment une extrémité, qui est prévue pour être actionnée par un mécanisme de commande additionnel en vue de dégager le mobile 1" du troisième mobile ou du quatrième mobile lorsque ces derniers sont susceptibles d'être actionnés par un dispositif de réglage connexe.

Dans ce troisième mode de réalisation, le couple résistif au pivotement du mobile de correction 1" qui est produit par les éléments de friction 61 ", 62", est supérieur à 2, 3, voire 5, voire 6 fois le couple résistif au pivotement de la bascule de correction autour de l'axe de rotation 6f". La bascule selon l'invention ou le dispositif d'embrayage selon l'invention peut être employé au sein de tout type de mécanisme pour lequel un dispositif d'embrayage unidirectionnel est requis. Par exemple, celui-ci peut être mis en oeuvre au sein d'une chaîne de correction unidirectionnelle d'une indication horaire, calendaire, ou de toute autre indication dérivée de l'heure telle que l'indication des phases de lune. Il peut également être employé au sein d'une chaîne de remontage manuel d'une montre automatique ou non, ou encore au sein d'une chaîne de remontage automatique d'une montre automatique à remontage unidirectionnel. Pour ces applications de remontage, les deuxième et troisième modes de réalisation sont préférés. Le dispositif d'embrayage peut être actionné, notamment le mobile menant 1, 1', 1" de ce dispositif d'accouplement peut être entraîné en rotation par un organe de commande susceptible d'être manipulé par le porteur de la pièce d'horlogerie ou bien par la chaîne de finissage, ou encore par la chaîne de remontage automatique de la pièce d'horlogerie.

Le dispositif d'embrayage selon l'invention peut également être combiné à des éléments connexes de blocage angulaire de la bascule indépendamment du sens de rotation du mobile menant, pour ainsi mettre en oeuvre un dispositif d'accouplement bidirectionnel d'au moins une chaîne cinématique d'une pièce d'horlogerie. Ce dispositif d'embrayage pourrait coopérer avec au moins un levier de manière à bloquer le ressort ou la bascule lorsque celui-ci est situé dans une position angulaire prédéterminée. Un tel agencement est décrit par exemple au sein de la demande de brevet EP2012199A2. Celle-ci divulgue notamment une bascule de correction de deux indications calendaires sur laquelle un mobile de correction est monté à friction. La correction des quantièmes est possible dans les deux sens de correction par la coopération de la bascule de correction et d'un levier de correction, tandis que la correction de l'indication des jours est possible uniquement dans le sens chronologique du fait du couple de pivotement du mobile de correction. Il est également imaginable de bloquer la position angulaire d'une bascule de correction d'un dispositif d'accouplement unidirectionnel directement par la tirette du mouvement horloger.

Le dispositif d'embrayage selon l'invention peut également mettre en oeuvre une bascule sur laquelle pivote plus d'un mobile correcteur, notamment deux mobiles correcteurs. Alternativement, elle peut également pivoter au moins un renvoi additionnel qui est en prise avec le mobile pour, par exemple, inverser le sens de rotation du mobile de correcteur afin de s'adapter à une application donnée.

Dans les différents modes de réalisation, le dispositif d'embrayage est agencé de sorte que la rotation autour de son axe 1d, 1d', 1d", 6f, 6f', 6f" du premier mobile 1, 1' ,1" et/ou du deuxième mobile 2, 2', 2" implique la rotation de la bascule autour de son axe 6f, 6f', 6f" jusqu'à ce que la bascule ou l'un des premier et deuxième mobile vienne buter contre un élément, notamment un mobile avec lequel le premier mobile ou le deuxième mobile engrène ou une butée limitant la course de rotation ou de pivotement de la bascule. Pour ce faire, comme vu précédemment, le couple résistif ou résistant à la rotation du premier et/ou du deuxième mobile par rapport à la bascule, notamment la somme des couples résistifs ou résistants à la rotation du premier et du deuxième mobile par rapport à la bascule, doit être supérieur au couple résistant ou résistif de rotation ou de pivotement de la bascule par rapport au bâti du mouvement. De préférence, le couple résistant ou résistif à la rotation du premier et/ou du deuxième mobile par rapport à la bascule est 2 fois supérieur, voire 3 fois supérieur, voire 5 fois supérieur, voire 6 fois supérieur, au couple résistif ou résistant au pivotement de la bascule autour de son axe de rotation ou pivotement. Pour pouvoir être comparées, les valeurs de ce couple doivent être ramenées au niveau d'un axe commun, par exemple l'axe de pivotement de la bascule.

Dans les différents modes de réalisation décrits plus haut, l'au moins un élément de friction coopère avec le premier arbre seul, en particulier avec une portion cylindrique du premier arbre ou, plus généralement, avec une portion cylindrique du premier mobile. Cependant, en variante l'au moins un élément de friction peut coopérer avec le deuxième arbre seul ou, plus généralement, avec une portion cylindrique du deuxième mobile, c'est-à-dire le mobile ou l'arbre mobile en rotation autour de l'axe autour duquel pivote la bascule. Alternativement encore, il peut être prévu un premier élément de friction coopérant avec le premier mobile et un deuxième élément de friction coopérant avec le deuxième mobile.

Dans les différents modes de réalisation décrits plus haut, la portion du premier mobile avec laquelle le ou les éléments de friction coopèrent est cylindrique et concentrique au mobile. Néanmoins, cette portion ou surface peut n'être que sensiblement cylindrique. Notamment, elle peut être légèrement tronconique et/ou à section droite légèrement elliptique. En outre, la portion ou surface peut aussi être excentrée relativement à l'axe de rotation du mobile.

L'invention porte aussi sur un mouvement 8 ; 8' ; 8" comprenant une bascule, notamment une bascule selon l'un des modes de réalisation décrits précédemment, ou comprenant un dispositif d'embrayage, notamment un dispositif d'embrayage selon l'un des modes de réalisation décrits précédemment.

L'invention porte enfin sur un mouvement d'horlogerie, notamment une montre, comprenant un tel mouvement.

L'invention présente l'avantage de fournir une bascule de structure simple qui est facile à monter dans un mouvement et qui permet en outre une maîtrise du couple de friction appliqué aux mobiles d'embrayage.

Grâce à l'invention, un ressort de friction est fabriqué d'un seul tenant avec une bascule d'embrayage. Le ressort peut être prévu pour générer une force radiale au niveau de l'axe de pivotement de la roue menante.

Le dispositif d'embrayage selon l'invention permet le déplacement en rotation de la bascule dans un premier sens lorsque la deuxième roue est déplacée en rotation dans le premier sens et permet le déplacement en rotation de la bascule dans un deuxième sens lorsque la deuxième roue est déplacée en rotation dans le deuxième sens.

L'au moins un élément de friction permet préférablement une friction entre l'au moins un élément de friction et la portion au moins sensiblement cylindrique du premier mobile.

## Revendications

1. Dispositif (7 ; 7' ; 7") d'embrayage, comprenant
- un premier mobile (1 ; 1 ' ; 1"),
- un deuxième mobile (2 ; 2' ; 2"),
- une bascule d'horlogerie (6) comprenant :
- au moins un premier élément (61 ; 61' ; 61") de guidage en rotation du premier mobile (1 ; 1 ' ; 1"),
- au moins un élément de friction (62 ; 62' ; 62") destiné à venir coopérer avec une portion (10c; 10c'; 10c") au moins sensiblement cylindrique du premier mobile,
- au moins un élément élastique (63 ; 63' ; 63") destiné à rappeler élastiquement l'au moins un élément de friction (62 ; 62' ; 62") en état de coopération avec ladite portion (10c ; 10c' ; 10c") du premier mobile (1 ; 1' ; 1" ), notamment en contact avec ladite portion (10c ; 10c' ; 10c") du premier mobile (1 ; 1' ; 1" ), la bascule (6) étant dotée d'un premier bras (600) dont un flanc (600a) est prévu pour être actionné par un mécanisme de commande additionnel (12), et le premier mobile (1 ; 1' ; 1") ou le deuxième mobile (2 ; 2' ; 2") étant susceptible de venir.
selon l'état de l'embrayage, en particulier selon la position de la bascule (6), dans une première position dans laquelle il est directement en prise avec un troisième mobile (Dq) d'une première chaîne cinématique ou dans une deuxième position dans laquelle il n'est pas en prise directe avec le troisième mobile (Dq), notamment dans une deuxième position dans laquelle il est directement en prise avec un quatrième mobile (Dj) d'une deuxième chaîne cinématique, et
le premier mobile (1 ; 1' ; 1" ) ou le deuxième mobile (2 ; 2' ; 2") étant liés cinématiquement, notamment liés cinématiquement par engrenage,
en particulier liés cinématiquement par engrenage direct, et
le dispositif d'embrayage étant agencé de sorte que la rotation autour de son axe du premier mobile (1 ; 1' ; 1") et/ou du deuxième mobile (2 ; 2' ; 2") implique la rotation de la bascule (6) autour de son axe jusqu'à ce que la bascule (6) ou l'un des premier et deuxième mobiles vienne buter contre un élément (B10, B100), ledit dispositif étant **caractérisé en ce qu'**il comprend un deuxième élément (66 ; 66' ; 66") de guidage en rotation de la bascule autour du deuxième mobile (2 ; 2' ; 2").

2. Dispositif selon la revendication précédente, **caractérisé en ce que** l'au moins un élément de friction applique au moins une force radiale ou sensiblement radiale sur ladite portion du premier mobile.

3. Dispositif selon l'une des revendications précédentes, **caractérisé en ce que** la bascule comprend une ouverture (6d ; 6d' ; 6d") de réception du premier mobile, notamment une fente (6d ; 6d' ;6d").

4. Dispositif selon la revendication précédente, **caractérisé en ce que** l'au moins un élément de friction est disposé sur un flanc ou sur une portion de flanc de la fente (6d ; 6d' ; 6d").

5. Dispositif selon la revendication 3 ou 4, **caractérisé en ce que** l'au moins un élément élastique comprend un deuxième bras (6a, 6b) dont un flanc coïncide au moins partiellement avec une portion de flanc de la fente (6d ; 6d' ; 6d").

6. Dispositif selon la revendication précédente, **caractérisé en ce que** le deuxième bras comprend au moins une surface d'appui de l'au moins un élément de friction.

7. Dispositif selon l'une des revendications 5 et 6, **caractérisé en ce que** la bascule comprend deux deuxièmes bras dont des extrémités (60e, 60f) sont conformées pour permettre l'engagement d'un arbre, notamment les deux extrémités forment un V permettant l'engagement du premier mobile en déformant élastiquement les deuxièmes bras.

8. Dispositif selon l'une des revendications précédentes, **caractérisé en ce que** le premier élément de guidage et l'au moins un élément de friction sont confondus, notamment **en ce que** l'élément de guidage comprend des surfaces d'appui (60a, 60b, 60c et 60d) destinées à coopérer par contact avec la portion cylindrique (10c).

9. Dispositif (6) selon l'une des revendications précédentes, **caractérisé en ce que** la bascule est monobloc.

10. Dispositif (6' ; 6") selon l'une des revendications 1 à 8, **caractérisé en ce que** la bascule comprend un corps (64' ; 64") et un composant (65' ; 65") rapporté sur le corps, le composant comprenant l'au moins un élément de friction (62 ; 62' ; 62") et l'au moins un élément élastique (63 ; 63' ; 63") et/ou le composant comprenant l'au moins un premier élément (61 ; 61' ; 61") de guidage en rotation.

11. Dispositif d'embrayage selon l'une des revendications précédentes, **caractérisé en ce qu'**il permet de corriger une indication calendaire, une indication d'heure, ou une indication dérivée de l'heure ou permet le remontage manuel ou automatique d'un accumulateur d'énergie.

12. Mouvement (8) comprenant un dispositif d'embrayage selon l'une des revendications précédentes.

13. Pièce d'horlogerie, notamment montre, comprenant un mouvement selon la revendication précédente ou un dispositif d'embrayage selon l'une des revendications 1 à 11.

14. Utilisation, comme composant d'un dispositif d'embrayage selon l'une des revendications 1 à 11, de ladite bascule.

## Patentansprüche

1. Kupplungsvorrichtung (7; 7'; 7"), umfassend:
- einen ersten Drehteil (1; 1'; 1"),
- einen zweiten Drehteil (2; 2'; 2"),
- eine Wippe (6) eines Uhrwerks, umfassend:
- mindestens ein erstes Element (61; 61'; 61") zur Drehführung des ersten Drehteils (1; 1'; 1"),
- mindestens ein Reibelement (62; 62'; 62"), das dazu bestimmt ist, mit einem wenigstens im Wesentlichen zylindrischen Abschnitt (10c; 10c'; 10c") des ersten Drehteils zusammenzuwirken,
- mindestens ein elastisches Element (63; 63'; 63"), das dazu bestimmt ist, das mindestens eine Reibelement (62; 62'; 62") elastisch in den Zustand des Zusammenwirkens mit dem Abschnitt (10c; 10c'; 10c") des ersten Drehteils (1; 1'; 1") zurückzuholen, insbesondere in den Kontakt mit dem Abschnitt (10c; 10c'; 10c") des ersten Drehteils (1; 1'; 1"),
wobei die Wippe (6) mit einem ersten Arm (600) ausgestattet ist, von dem eine Flanke (600a) dafür vorgesehen ist, von einem zusätzlichen Steuerungsmechanismus (12) betätigt zu werden,
wobei der erste Drehteil (1; 1'; 1") oder der zweite Drehteil (2; 2'; 2") dazu eingerichtet ist, je nach dem Zustand der Kupplung, insbesondere je nach der Position der Wippe (6), in eine erste Position zu gelangen, in welcher er direkt in Eingriff mit einem dritten Drehteil (Dq) einer ersten kinematischen Kette steht, oder in eine zweite Position, in welcher er nicht in direktem Eingriff mit dem dritten Drehteil (Dq) steht, insbesondere in eine zweite Position, in welcher er direkt in Eingriff mit einem vierten Drehteil (Dj) einer zweiten kinematischen Kette steht, und
wobei der erste Drehteil (1; 1'; 1") oder der zweite Drehteil (2; 2'; 2") kinematisch verbunden, insbesondere durch Zahneingriff kinematisch verbunden, insbesondere durch direkten Zahneingriff kinematisch verbunden sind, und
wobei die Kupplungsvorrichtung derart ausgebildet ist, dass die Drehung des ersten Drehteils (1; 1'; 1") und/oder des zweite Drehteils (2; 2'; 2") um seine Achse die Drehung der Wippe (6) um ihre Achse zur Folge hat, bis die Wippe (6) oder eines von dem ersten und zweiten Drehteil an einem Element (B10, B100) zur Anlage kommt, wobei die Vorrichtung **dadurch gekennzeichnet ist, dass** sie ein zweites Element (66; 66'; 66") zur Drehführung der Wippe um den zweiten Drehteil (2; 2'; 2") umfasst.

2. Vorrichtung nach dem vorhergehenden Anspruch, **dadurch gekennzeichnet, dass** das mindestens eine Reibelement mindestens eine radiale oder im Wesentlichen radiale Kraft auf den Abschnitt des ersten Drehteils ausübt.

3. Vorrichtung nach einem der vorhergehenden Ansprüche, **dadurch gekennzeichnet, dass** die Wippe eine Öffnung (6d; 6d'; 6d") zur Aufnahme des ersten Drehteils umfasst, insbesondere einen Schlitz (6d; 6d'; 6d").

4. Vorrichtung nach dem vorhergehenden Anspruch, **dadurch gekennzeichnet, dass** das mindestens eine Reibelement an einer Flanke oder an einem Flankenabschnitt des Schlitzes (6d; 6d'; 6d") angeordnet ist.

5. Vorrichtung nach Anspruch 3 oder 4, **dadurch gekennzeichnet, dass** das mindestens eine elastische Element einen zweiten Arm (6a, 6b) umfasst, von dem eine Flanke wenigstens teilweise mit einem Flankenabschnitt des Schlitzes (6d; 6d'; 6d") zusammenfällt.

6. Vorrichtung nach dem vorhergehenden Anspruch, **dadurch gekennzeichnet, dass** der zweite Arm mindestens eine Anlagefläche des mindestens einen Reibelements umfasst.

7. Vorrichtung nach einem der Ansprüche 5 und 6, **dadurch gekennzeichnet, dass** die Wippe zwei zweite Arme umfasst, von denen Enden (60e, 60f) dafür ausgebildet sind, den Eingriff einer Welle zu ermöglichen, und insbesondere die zwei Enden ein "V" bilden, das den Eingriff des ersten Drehteils ermöglicht, indem es die zweiten Arme elastisch verformt.

8. Vorrichtung nach einem der vorhergehenden Ansprüche, **dadurch gekennzeichnet, dass** das erste Führungselement und das mindestens eine Reibelement zusammenfallen, insbesondere dadurch, dass das Führungselement Anlageflächen (60a, 60b, 60c und 60d) umfasst, die dazu bestimmt sind, durch Kontakt mit dem zylindrischen Abschnitt (10c) zusammenzuwirken.

9. Vorrichtung (6) nach einem der vorhergehenden Ansprüche, **dadurch gekennzeichnet, dass** die Wippe einstückig ist.

10. Vorrichtung (6'; 6") nach einem der Ansprüche 1 bis 8, **dadurch gekennzeichnet, dass** die Wippe einen Körper (64'; 64") und eine an den Körper angesetzte Komponente (65'; 65") umfasst, wobei die Komponente das mindestens eine Reibelement (62; 62'; 62") und das mindestens eine elastische Element (63; 63'; 63") umfasst und/oder die Komponente das mindestens eine erste Element (61; 61'; 61") zur Drehführung umfasst.

11. Kupplungsvorrichtung nach einem der vorhergehenden Ansprüche, **dadurch gekennzeichnet, dass** sie ermöglicht, eine Kalenderanzeige, eine Stundenanzeige oder eine von der Stunde abgeleitete Anzeige zu korrigieren, oder das manuelle oder automatische Aufziehen eines Energiespeichers ermöglicht.

12. Uhrwerk (8), welches eine Kupplungsvorrichtung nach einem der vorhergehenden Ansprüche umfasst.

13. Uhr, insbesondere Kleinuhr, welche ein Uhrwerk nach dem vorhergehenden Anspruch oder eine Kupplungsvorrichtung nach einem der Ansprüche 1 bis 11 umfasst.

14. Verwendung der Wippe als Komponente einer Kupplungsvorrichtung nach einem der Ansprüche 1 bis 11.

## Claims

1. Coupling device (7; 7'; 7"), comprising
- a first wheel (1; 1'; 1"),
- a second wheel (2; 2'; 2"),
- a horology lever (6) comprising:
- at least a first element (61; 61'; 61") for guiding in rotation of the first wheel (1; 1'; 1"),
- at least one friction element (62; 62'; 62") which is designed to co-operate with an at least substantially cylindrical portion (10c; 10c'; 10c") of the first wheel,
- at least one resilient element (63; 63'; 63"), which is designed to return resiliently the at least one friction element (62; 62'; 62") to a state of co-operation with the said portion (10c; 10c'; 10c") of the first wheel (1; 1'; 1"), notably in contact with the said portion (10c; 10c'; 10c") of the first wheel (1; 1'; 1"),
the lever (6) being provided with a first arm (600), a flank (600a) of which is designed to be actuated by an additional control mechanism (12), and the first wheel (1; 1'; 1") or the second wheel (2; 2'; 2") being able, according to the state of the coupling, and in particular according to the position of the lever (6), to go into a first position in which it is directly engaged with a third wheel (Dq) of a first kinematic chain, or into a second position in which it is not directly engaged with the third wheel (Dq), and notably into a second position in which it is directly engaged with a fourth wheel (Dj) of a second kinematic chain, and the first wheel (1; 1'; 1") or the second wheel (2; 2'; 2") being connected kinematically, and notably connected kinematically by coupling, and in particular connected kinematically by direct coupling, and the coupling device being arranged such that the rotation around its axis of the first wheel (1; 1'; 1") and/or of the second wheel (2; 2'; 2") involves the rotation of the lever (6) around its axis until the lever (6) or one of the first and second wheels abuts an element (B10, B100), the said device being **characterized in that** it comprises a second element (66; 66'; 66") for guiding in rotation of the lever around the second wheel (2; 2'; 2") .

2. Device according to the preceding claim, **characterized in that** the at least one friction element applies at least one radial or substantially radial force on the said portion of the first wheel.

3. Device according to one of the preceding claims, **characterized in that** the lever comprises an opening (6d; 6d'; 6d") for receipt of the first wheel, and notably a slot (6d; 6d'; 6d").

4. Device according to the preceding claim, **characterized in that** the at least one friction element is arranged on a flank or on a flank portion of the slot (6d; 6d'; 6d").

5. Device according to Claim 3 or 4, **characterized in that** the at least one resilient element comprises a second arm (6a, 6b), a flank of which coincides at least partially with a flank portion of the slot (6d; 6d'; 6d") .

6. Device according to the preceding claim, **characterized in that** the second arm comprises at least one support surface for the at least one friction element.

7. Device according to one of Claims 5 and 6, **characterized in that** the lever comprises two second arms, the ends (60e, 60f) of which are formed such as to permit the engagement of a shaft, and notably the two ends form a "V", thus permitting the engagement of the first wheel by deforming the second arms resiliently.

8. Device according to one of the preceding claims, **characterized in that** the first guiding element and the at least one friction element are combined, and notably in that the guiding element comprises support surfaces (60a, 60b, 60c and 60d) which are designed to co-operate by contact with the cylindrical portion (10c).

9. Device (6) according to one of the preceding claims, **characterized in that** the lever is in a single piece.

10. Device (6'; 6") according to one of Claims 1 to 8, **characterized in that** the lever comprises a body (64'; 64") and a component (65'; 65") which is added onto the body, the component comprising the at least one friction element (62; 62'; 62") and the at least one resilient element (63; 63'; 63") and/or the component comprising the at least one first element (61; 61'; 61") for guiding in rotation.

11. Coupling device according to one of the preceding claims, **characterized in that** it makes it possible to correct a calendar indication, a time indication, or an indication derived from the time, or it permits manual or automatic winding of an energy accumulator.

12. Movement (8) comprising a coupling device according to one of the preceding claims.

13. Horology piece, notably a watch, comprising a movement according to the preceding claim, or a coupling device according to one of Claims 1 to 11.

14. Use of the said lever as a component of a coupling device according to one of Claims 1 to 11.
